# EUROPÄISCHE PATENTSCHRIFT

(11) **EP 1 716 014 B1**
(45) Veröffentlichungstag und Bekanntmachung des Hinweises auf die Patenterteilung: **17.10.2007**
(21) Anmeldenummer: 04802955.7
(22) Anmeldetag: 16.12.2004
(51) Int. Cl.: B60J 7/12

(54) **BEWEGLICHES DACH FÜR EIN CABRIOLET-FAHRZEUG**
MOVABLE ROOF FOR A CONVERTIBLE CAR
TOIT MOBILE POUR UN VEHICULE DU TYPE CABRIOLET

(30) Priorität: 20.12.2003 DE 10360326
(43) Veröffentlichungstag der Anmeldung: 02.11.2006
(73) Patentinhaber: Wilhelm Karmann GmbH, 49084 Osnabrück (DE)
(72) Erfinder: HOLLENBECK, Sven, 49492 Westerkappeln (DE)
(86) Internationale Anmeldenummer: PCT/DE2004/002769
(87) Internationale Veröffentlichungsnummer: WO 2005/061254

(56) Entgegenhaltungen:
- EP-A- 0 356 639
- DE-A1- 10 240 759
- DE-A1- 19 956 567

## Beschreibung

Die Erfindung betrifft ein bewegliches, für ein Cabriolet-Fahrzeug vorgesehenes Dach, gemäß dem Oberbegriff von Anspruch 1, das einzelne, zueinander bewegliche Rahmenteile umfasst. Sie betrifft weiter ein Cabriolet-Fahrzeug mit einem solchen Dach, gemäß Anspruch 11. Ein derartiges Fahrzeug bzw. Dach ist allgemein bekannt.

Die EP 0 356 639 zeigt ein bewegliches Fahrzeugdach, das einzelne Rahmenteile umfasst. Einzelne Rahmenteile sind dabei zumindest teilweise nach innen abgedeckt.

Nachteilig bei einem bekannten derartigen Fahrzeug oder Dach ist jedoch eine häufig als unzureichend empfundene optische Anmutung der vom Fahrzeuginnenraum sichtbaren Flächen des Dachs, insbesondere im Bereich der beweglichen Rahmenteile, die auch oft als Gestängeteile bezeichnet werden.

Der Erfindung liegt daher die Aufgabe zugrunde, diesem Nachteil abzuhelfen.

Diese Aufgabe wird erfindungsgemäß mit den Merkmalen des kennzeichenden Teils von Anspruch 1 gelöst. Dazu ist bei einem gattungsgemäßen Cabriolet-Fahrzeug bzw. Dach vorgesehen, dass mindestens eines der Rahmenteile zum Fahrzeuginnenraum durch eine Verkleidungsschale abgedeckt und an der Verkleidungsschale ein Innenhimmel befestigt ist. Die Verkleidungsschale ist dabei geeignet geformt, so dass sie zumindest das jeweilige Rahmenteil abdeckt, das damit vom Fahrzeuginnenraum aus nicht mehr sichtbar ist. Das Rahmenteil kann damit hinsichtlich Material und geometrischer Gestaltung ohne Rücksicht auf die optische Anmutung im Hinblick auf statische Eigenschaften beim Halten des Dachs oder beim Ableiten von Kräften, z.B. im Kollisionsfall, optimiert werden. Durch die Befestigung des Innenhimmels an der Verkleidungsschale ergibt sich vom Fahrzeuginnern aus gesehen eine geschlossene Fläche des Daches, weil ein spaltfreier Übergang zwischen Innenhimmel und der oder jeder Verkleidungsschale realisierbar ist.

Die abhängigen Ansprüche sind auf bevorzugte Ausführungsformen der vorliegenden Erfindung gerichtet.

Bevorzugt ist die oder jede Verkleidungsschale zumindest auf einer vom Fahrzeuginnenraum aus sichtbaren Außenfläche mit einer Lackierung, einer Beschichtung oder einem Bezug, insbesondere einer Beschichtung mit einem Holzfurnier, versehen. Während das Rahmenteil also im Hinblick auf statisch/mechanische Aspekte optimierbar ist, ergibt sich eine Optimierbarkeit der Verkleidungsschale im Hinblick auf optische und/oder haptische Aspekte.

Wenn die oder jede Verkleidungsschale mit dem jeweiligen Rahmenteil lösbar verbunden, insbesondere verrastet ist, ergibt sich eine leichte Möglichkeit zum Demontieren einzelner Verkleidungsschalen oder des gesamten Innenteils des Daches, also Fahrzeughimmel zusammen mit den jeweiligen Verkleidungsschalen. Beim Anbringen der Verkleidungsschalen mit daran zumindest abschnittsweise befestigtem Innenhimmel ergibt sich auch die für einen faltenfreien Sitz notwendige Spannung des Innenhimmels.

Bevorzugt sind in einem zwischen der oder jeder Verkleidungsschale und dem jeweiligen Rahmenteil verbleibenden Zwischenraum ein Funktionselement, also z.B. ein Schockabsorber und/oder ein Airbag und/oder eine oder mehrere Leitungen, angeordnet.

Eine besonders günstige Anbringung eines Funktionselementes ist dabei möglich, wenn das jeweilige Rahmenteil eine Ausbuchtung zur Aufnahme, insbesondere zur formschlüssigen Aufnahme des Funktionselementes aufweist.

Wenn in dem Zwischenraum als Funktionselement ein Airbag angeordnet ist, weist die Verkleidungsschale im Bereich des Airbags bevorzugt eine Klappe auf. Beim Auslösen des Airbags öffnet sich damit nur die Klappe. Die Notwendigkeit des Abtrennens der gesamten Verkleidungsschale, was evtl. ein störendes und besonders im Kollisionsfall unerwünschtes Herunterfallen des Innenhimmels in den Fahrzeuginnenraum nach sich ziehen kann, ist auf diese Weise verhindert.

Die Klappe ist bevorzugt einseitig an einem Scharnier gehalten. Weiter bevorzugt ist auf der dem Scharnier gegenüberliegenden Seite der Klappe eine Sollbruchstelle in der Verkleidungsschale vorgesehen. Besonders bevorzugt sind abgesehen von der Seite mit dem Scharnier auf sämtlichen anderen Seiten der Klappe Sollbruchstellen in der Verkleidungsschale vorgesehen.

Der Vorteil der Erfindung und ihrer Ausgestaltungen besteht damit insbesondere darin dass eine optische Gestaltung der im Fahrzeuginnern sichtbaren Teile des Dachs möglich ist, die auf die sonstige Innenraumgestaltung des Fahrzeugs abgestimmt ist, wie sie in diesem Umfang bisher nicht möglich war. Die Rahmenteile können z.B. komplett mit Verkleidungsschalen in Holzoptik abgedeckt werden. Eine solche Holzoptik greift vorzugsweise eine Optik von Holzelementen oder Elementen mit Holzoptik, die an anderer Stelle des Fahrzeugs, z.B. im Bereich der Armaturentafel, vorgesehen sind auf, so dass ein harmonischer Gesamteindruck entsteht und eine auf das jeweilige Preissegment des Fahrzeugs abgestimmte Gestaltung des Fahrzeuginnenraums möglich ist. Zudem ermöglich der zwischen Verkleidungsschale und jeweiligem Rahmenteil verbleibende Zwischenraum die Verwendung der Kombination von Rahmenteil und Verkleidungsschale als Funktionsträger, indem in dem Zwischenraum ein Funktionselement, also z.B. ein Schockabsorber, ein Airbag und/oder eine oder mehrere Leitungen, angeordnet sind.

Nachfolgend wird ein Ausführungsbeispiel der Erfindung anhand der Zeichnung näher erläutert. Einander entsprechende Gegenstände oder Elemente sind in allen Figuren mit den gleichen Bezugszeichen versehen.

Darin zeigen
- Fig. 1: ein Cabriolet-Fahrzeug mit einem beweglichen Dach,
- Fig. 2: ein Gestänge des beweglichen Daches,
- Fig. 3: einen Schnitt durch einen Abschnitt des Dachgestänges mit einem Rahmenteil und einer diesem zugeordneten Verkleidungsschale,
- Fig. 4: Nutzungsmöglichkeiten eines zwischen Rahmenteil und Verkleidungsschale verbleibenden Zwischenraums und
- Fig. 5: weitere Nutzungsmöglichkeiten des Zwischenraumes.

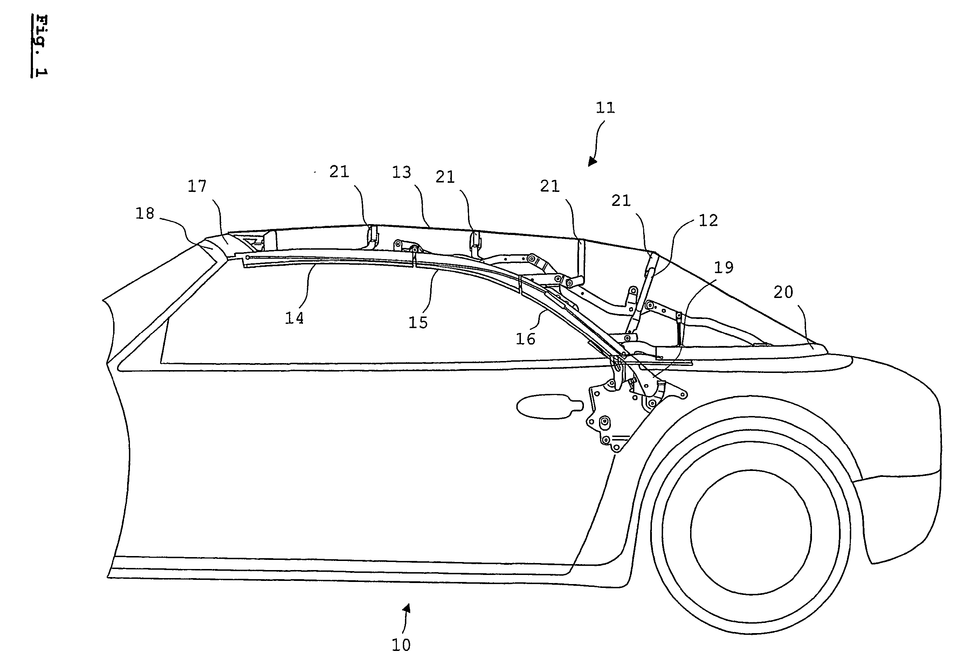

Fig. 1 zeigt in einer schematischen Darstellung ein Cabriolet-Fahrzeug 10, im Folgenden kurz entweder als Cabriolet 10 oder als Fahrzeug 10 bezeichnet, mit einem beweglichen Dach 11, das ein insgesamt mit 12 bezeichnetes Gestänge umfasst, welches vollständig oder teilweise von einem Bezug 13, insbesondere in einer Form als Stoffverdeck, überspannt ist. Alternativ ist auch möglich, dass das Dach 11 in einer nicht dargestellten Ausführung als sog. Retractable Hardtop (RHT) ein oder mehrere starre Außenhautteile umfasst.

Das Gestänge umfasst eine Mehrzahl direkt oder indirekt gelenkig miteinander verbundener Rahmenteile 14, 15, 16. Ein vorderes Rahmenteil 14 ist üblicherweise mit einem weiteren Rahmenteil, nämlich einer Dachspitze 17, fest verbunden. Die Dachspitze 17 ist bei geschlossenem Dach 11 mit einem vorderen Windschutzscheibenrahmen 18 verriegelt. Ein hinteres Rahmenteil 16 ist an einem Rahmenbasisteil 19, das fest mit der Karosserie des Fahrzeugs 10 verbunden ist, angelenkt. Entweder mit dem Rahmenbasisteil 19 oder dem hinteren Rahmenteil 16 ist in an sich bekannter weise ein Spannbügel 20 verbunden, der bei geschlossenem Dach 11 auf der Karosserie des Fahrzeugs 10 aufliegt. Der Bezug 13 wird über am Gestänge 12 angebrachte und sich quer zur Fahrtrichtung erstreckende Spriegel 21 geführt.

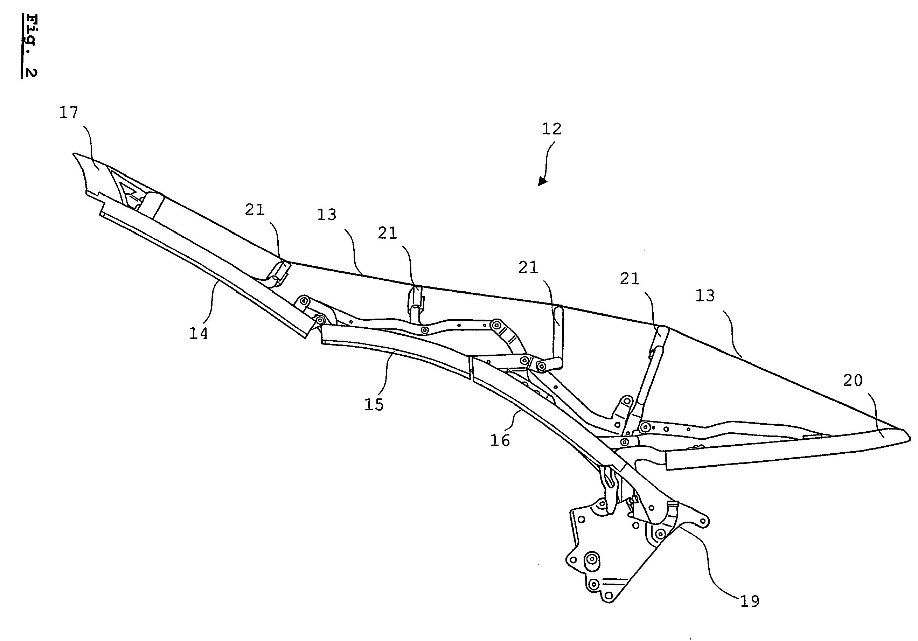

Fig. 2 zeigt eine separate Darstellung des Gestänges 12 in einer einem teilweise geöffneten Dach entsprechenden Stellung.

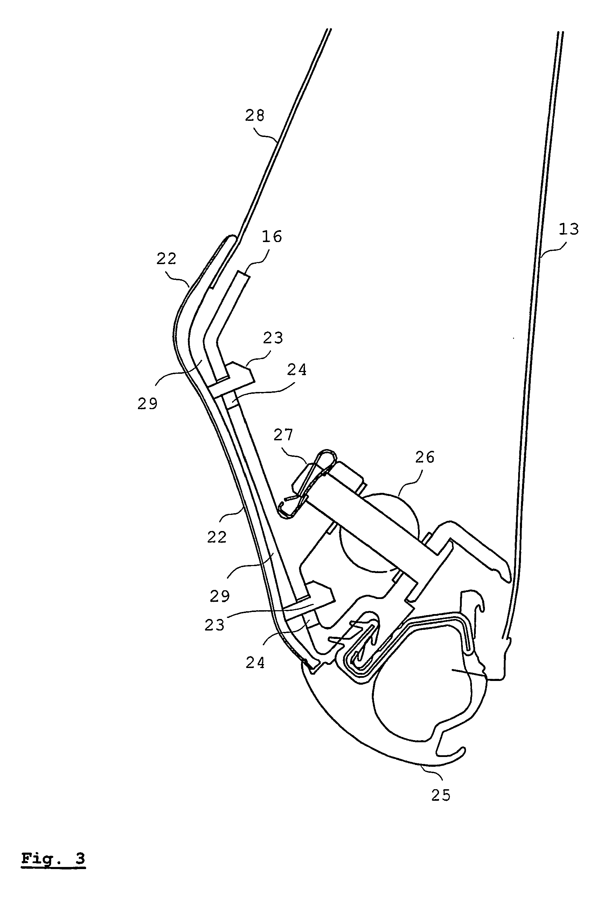

Fig. 3 zeigt einen Schnitt durch das hintere Rahmenteil 16. Die Schnittebene verläuft dabei senkrecht oder zumindest im Wesentlichen senkrecht zur längsten Achse des hinteren Rahmenteils 16. An dem Rahmenteil 16 ist als Verkleidung eine Verkleidungsschale 22 oder dergleichen, z.B. durch eine Fixierung mit Hilfe von Rastelementen 23, die in dafür vorgesehene Ausnehmungen 24 des Rahmenteils 16 eingreifen, angebracht. Des Weiteren ist in das Rahmenteil 16 in an sich bekannter Weise ein Abschnitt einer Dichtung 25 eingesetzt. An dem Rahmenteil 16 ist ferner in an sich bekannter und in der Schnittdarstellung nicht ersichtlicher Art und Weise der Bezug 13 des Dachs 11 angebracht. Zur automatischen Bewegung, also zum Auffalten oder zum Zusammenlegen des Dachs 11 ist eine Hydraulik vorgesehen, von der in Fig. 3 ein Hydraulikzylinder 26 dargestellt ist, der über einen Bolzen 27 mit dem Rahmenteil 16 verbunden ist.

Die Verkleidungsschale 22 ist so ausgebildet, dass sie das jeweilige Rahmenteil 14, 15, 16, 17, also auch Rahmenteile 14-17, die in Fig. 3 nicht separat dargestellt sind, wie das vordere Rahmenteil 14, das Rahmenteil 15 und die Dachspitze 17, zum Fahrzeuginnenraum hin abdeckt, so dass weder das einzelne Rahmenteil 14-17 noch Teile des umgebenden Gestänges 12 vom Fahrzeuginnern her sichtbar sind. Jedem Rahmenteil 14-17 ist damit eine eigene Verkleidungsschale 22 zugeordnet. Jede Verkleidungsschale 22 kann auf der im Fahrzeuginnern sichtbaren Außenfläche eine optisch ansprechende Lakkierung, Beschichtung, Textur oder dergleichen aufweisen. Bevorzugte Ausführungsformen von Verkleidungsschalen 22 zeichnen sich dadurch aus, dass sie mit einem (Holz-)Furnier versehen sind und damit als Furnierblende fungieren. Bei der Wahl des Furniers können selbstverständlich Furniere, die an anderer Stelle im Fahrzeug verwendet werden, also z.B. im Bereich der Armaturentafel, berücksichtigt werden, so dass sich für das Fahrzeug 10 ein optisch gleichermaßen einheitliches wie hochwertiges Gesamtbild ergibt. Bei weiteren bevorzugten Ausführungsformen kann eine Lackierung der Verkleidungsschalen 22, z.B. in der Farbe des Fahrzeugs 10, oder ein Bezug mit Leder, Stoff oder dergleichen vorgesehen sein. Schließlich sind auch Verkleidungsschalen denkbar, die einen metallischen Überzug, z.B. Chrom, Carbon/Carbonoptik oder ähnliches, aufweisen oder vollständig aus einem metallischen Werkstoff, z.B. Alu, insbesondere in der Form von Aludruckgusselementen, gefertigt sind und die zur ansprechenden Gestaltung der Oberfläche oder der sichtbaren Außenfläche poliert, gebürstet oder in ähnlicher Weise bearbeitet sind.

Eine der Außenseiten der Verkleidungsschale 22 ist der Dichtung 25 und damit dem Fahrzeugäußeren zugewandt. Die gegenüberliegende Außenseite der Verkleidungsschale 22 ist entsprechend dem Fahrzeuginneren zugewandt. An dieser Seite ist an der Verkleidungsschale 22 ein Innenhimmel 28, z.B. durch Verkleben oder sonst geeignete Befestigungsmöglichkeiten, angebunden. Der Innenhimmel 28 ist also direkt an der als Innenverkleidung des Dachs 11 fungierenden Verkleidungsschale 22 befestigt.

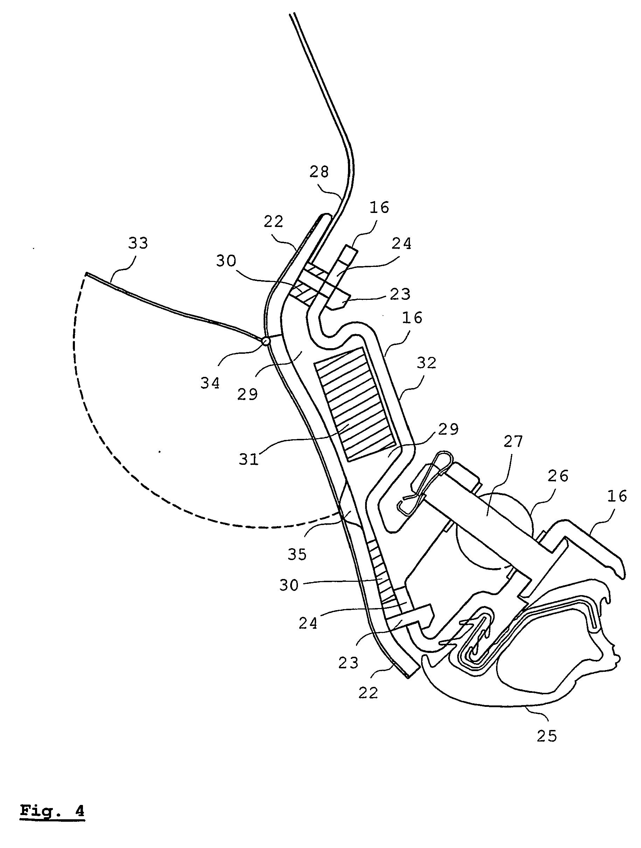

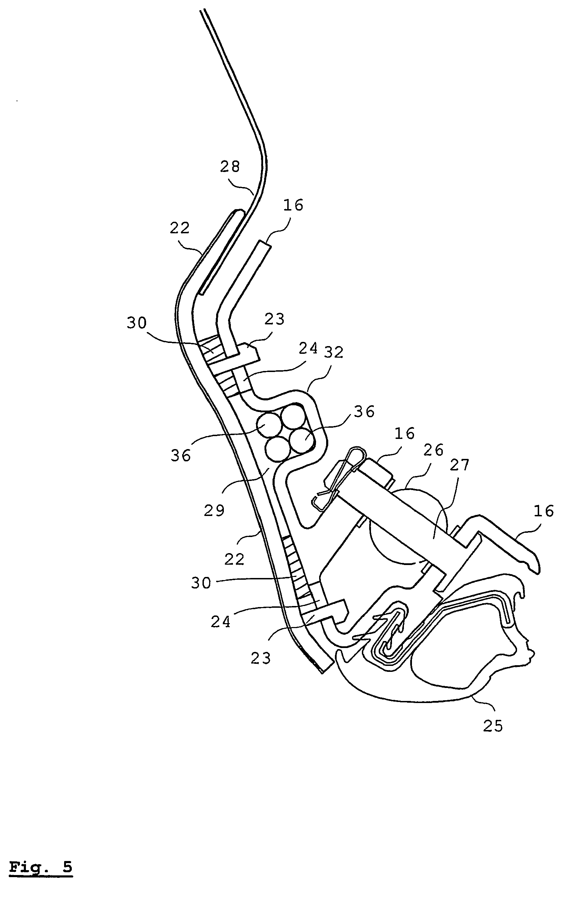

Zwischen der Verkleidungsschale 22 und dem Rahmenteil 16 verbleibt ein Zwischenraum 29. Der Zwischenraum 29 ist auf unterschiedliche Art und Weise nutzbar, wie anhand der weiteren Figuren 4 und 5 verdeutlicht wird.

Fig. 5 zeigt eine im Hinblick auf zusätzliche Sicherheitsaspekte des Fahrzeugs 10 optimierte Nutzung einzelner oder mehrerer der sich zwischen je einer Verkleidungsschale 22 und dem jeweiligen Rahmenteil 14-17 ergebenden Zwischenräume 29. Dazu ist in den Zwischenraum 29 entweder vollflächig oder - wie dargestellt - abschnittsweise als Schockabsorber 30 ein elastisch verformbares Material eingebracht. Der oder jeder Schockabsorber 30 bewirkt, dass beim Stoß gegen die Verkleidungsschale 22 diese zurückweicht und aufgrund der elastischen Verformbarkeit des Schockabsorbers 30 einen Teil der kinetischen Energie des Stoßes aufnimmt. Das Verletzungsrisiko für Personen im Fahrzeuginnenraum ist damit insbesondere bei einer Unfallsituation verringert. Zur Verringerung des Verletzungsrisikos trägt aber auch bereits die oder jede Verkleidungsschale 22 selbst bei, die, anders als z.B. die Rahmenteile 14-17 oder das Gestänge 12, eine glatte, kantenfreie Oberfläche aufweist und darüber hinaus ggf. selbst aus einem elastischen Werkstoff, z.B. Kunststoff mit einem aufgebrachten Holzfurnier o.ä., gefertigt ist.

Der oder jeder Schockabsorber 30 ist aufgrund seiner elastischen Verformbarkeit auch zur Arretierung der Verkleidungsschale 22 am jeweiligen Rahmenteil 14-17 wirksam. Wenn nämlich der Schockabsorber 30 beim Anbringen der Verkleidungsschale 22 komprimiert wird, ergibt sich ein einer Federvorspannung vergleichbarer Druck, der geeignet ist, die Rastelemente 23 in der vorgesehenen Position zu halten.

Zusätzlich oder alternativ zu einem Schockabsorber 30 kann im Zwischenraum 29 ein Airbag 31 vorgesehen sein (siehe Figur 4). Zur Anordnung des Airbags 31 im Zwischenraum 29 kann je nach Geometrie des jeweiligen Rahmenteils 16 eine zur Aufnahme des Airbags 31 vorgesehene Ausbuchtung 32 erforderlich sein. Der Airbag 31 ist in Bezug auf die Verkleidungsschale 22 hinter einem beweglichen Element derselben, z.B. einer Klappe 33, positioniert. Die Darstellung in Fig. 4 zeigt die Klappe 33 in geöffnetem Zustand. Dazu ist sie einseitig an einem Scharnier 34 gehalten. Auf der dem Scharnier 34 gegenüberliegenden Seite der Klappe 33 ist eine Sollbruchstelle 35 vorgesehen. Beim Auslösen des Airbags 31 gibt die Sollbruchstelle 35 nach, so dass die Klappe 33 um den Scharnier 34 aufschwenkt und dem sich öffnenden Luftsack des Airbags 31 den Weg freigibt.

Fig. 5 zeigt eine alternative oder zusätzliche Nutzungsmöglichkeit einzelner oder mehrerer der sich zwischen je einer Verkleidungsschale 22 und dem jeweiligen Rahmenteil 14-17 ergebenden Zwischenräume 29. Im Zwischenraum 29 verlaufen nämlich Leitungen 36, die durch die Verkleidungsschale 22 verdeckt und damit unsichtbar aber gleichzeitig aufgrund deren Entfernbarkeit, nämlich z.B. durch Lösen der Rastverbindungen 23, im Wartungsfall leicht zugänglich sind. Bei den Leitungen 36 kann es sich um elektrische, hydraulische oder pneumatische Leitungen 36 handeln, also um Leitungen zur Kraft-, Leistungs- oder Signalübertragung. Für spezielle Anwendungen der Signalübertragung können einzelne Leitungen 36 auch in Form von Lichtleitern ausgeführt sein.

Dargestellt ist eine Situation, bei der ein Bündel von Leitungen 36, nämlich vier Leitungen 36, in einer dafür vorgesehenen Ausbuchtung 32 des Rahmenteils 16 verläuft. Selbstverständlich sind solche Ausbuchtungen 32 nur aufgrund des Gesamtquerschnitts einzelner Leitungen 36 oder eines Bündels von Leitungen 36 erforderlich. Einzelne Leitungen 36 mit ausreichend geringem Querschnitt können auch - nicht dargestellt - ohne spezielle Ausbuchtungen 32 im Zwischenraum 29 verlegt werden.

Wenn eine Fixierung solcher Leitungen 36 erforderlich ist, kann dies z.B. zwischen zwei benachbart zueinander positionierten Schockabsorbern 30 oder durch Anklipsen oder dergleichen an den Rastelementen 23 erfolgen. Eine auf den Querschnitt einer einzelnen Leitung 36 oder eines Bündels von Leitungen 36 abgestimmte Ausbuchtung 32 dient in vorteilhafter Weise sowohl der sicheren Fixierung und Führung der Leitung(en) 36 wie auch dem Schutz, etwa beim Bewegen des Dachs 11.

Die beschriebenen "Nutzungsformen" des Zwischenraums 29, also Schockabsorber 30 (Fig. 4, 5), Airbag 31 (Fig. 4) und Leitungsführung (Fig. 5) sind beliebig miteinander kombinierbar.

Damit lässt sich die Erfindung kurz wie folgt darstellen:

Es wird ein Dach 11 für ein Cabrioletfahrzeug 10 oder dergleichen, also z.B. auch für einen Roadster, angegeben, bei dem einzelne oder alle Rahmenteile 14-17 des Dachs mit einer Verkleidungsschale 22 abgedeckt sind, an der insbesondere auch der Innenhimmel 28 befestigt ist. Das oder jedes Verkleidungsteil 22 ist zumindest im Bereich seiner sichtbaren, also zum Fahrzeuginnern gewandten Außenfläche optisch ansprechend in einer zum Fahrzeug 10 passenden Art und Weise gestaltet und dazu z.B. mit einem Holzfurnier oder einer Holzoptik versehen. Der zwischen dem Verkleidungsteil 22 und dem jeweiligen Rahmenteil 14-17 verbleibende Zwischenraum 29 steht zum Anbringen von Schockabsorbern 30, Airbags 31 oder zum Führen von Leitungen 36 zur Verfügung. Insgesamt wird die Kombination aus Rahmenteil 14-17 und Verkleidungsteil 22 damit zu einem "Funktionsträger" (Halten des Innenhimmels 28, Anbringen von Schockabsorber(n) 30, Airbag 31 und/oder Leitungen 36).

### Bezugszeichenliste

- 10: Cabriolet-Fahrzeug
- 11: Dach
- 12: Gestänge
- 13: Bezug
- 14: Rahmenteil, vorderes
- 15: Rahmenteil
- 16: Rahmenteil. hinteres
- 17: Rahmenteil (Dachspitze)
- 18: Windschutzscheibenrahmen
- 19: Rahmenbasisteil
- 20: Spannbügel
- 21: Spriegel
- 22: Verkleidungsschale
- 23: Rastelement
- 24: Ausnehmung
- 25: Dichtung
- 26: Hydraulikzylinder
- 27: Bolzen
- 28: Innenhimmel
- 29: Zwischenraum
- 30: Schockabsorber
- 31: Airbag
- 32: Ausbuchtung
- 33: Klappe
- 34: Scharnier
- 35: Sollbruchstelle
- 36: Leitung

## Patentansprüche

1. Bewegliches, für ein Cabriolet-Fahrzeug (10) vorgesehenes Dach (11), das einzelne Rahmenteile (14, 15, 16, 17) umfasst,
**dadurch gekennzeichnet, dass**
mindestens eines der Rahmenteile (14, 15, 16, 17) zu einem Fahrzeuginnenraum durch eine Verkleidungsschale (22) abgedeckt ist und dass an der Verkleidungsschale (22) ein Innenhimmel (28) befestigt ist.

2. Dach (11) nach Anspruch 1,
wobei die oder jede Verkleidungsschale (22) zumindest auf einer vom Fahrzeuginnenraum aus sichtbaren Außenfläche eine Lackierung, eine Beschichtung, insbesondere eine Beschichtung mit einem Holzfurnier, oder einen Bezug aufweist.

3. Dach (11) nach Anspruch 1 oder 2,
wobei die oder jede Verkleidungsschale (22) mit dem jeweiligen Rahmenteil (14, 15, 16, 17) lösbar verbunden, insbesondere verrastet, ist.

4. Dach (11) nach einem der vorangehenden Ansprüche, wobei in einem zwischen der oder jeder Verkleidungsschale (22) und dem jeweiligen Rahmenteil (14, 15, 16, 17) verbleibenden Zwischenraum (29) ein Funktionselement (30, 31, 36), nämlich insbesondere ein Schockabsorber (30) und/oder ein Airbag (31) und/oder eine oder mehrere Leitungen (36), angeordnet sind.

5. Dach (11) nach Anspruch 4,
wobei das jeweilige Rahmenteil (14, 15, 16, 17) zur Aufnahme des jeweiligen Funktionselementes (30, 31, 36) eine Ausbuchtung (32) aufweist.

6. Dach (11) nach Anspruch 5,
wobei die Ausbuchtung (32) im Hinblick auf eine formschlüssige Aufnahme des Funktionselementes (30, 31, 36), insbesondere einer oder mehrerer Leitungen (36), ausgeformt ist.

7. Dach (11) nach Anspruch 4, 5 oder 6,
wobei in dem Zwischenraum (29) als Funktionselement ein Airbag (31) angeordnet ist und wobei die Verkleidungsschale (22) im Bereich des Airbags (31) eine Klappe (33) aufweist.

8. Dach (11) nach Anspruch 7,
wobei die Klappe (33) einseitig an einem Scharnier (34) gehalten ist.

9. Dach (11) nach Anspruch 8,
wobei auf der dem Scharnier (34) gegenüberliegenden Seite der Klappe (33) eine Sollbruchstelle (35) in der Verkleidungsschale (22) vorgesehen ist.

10. Dach (11) nach Anspruch 9,
wobei abgesehen von der Seite mit dem Scharnier (34) auf sämtlichen anderen Seiten der Klappe (33) Sollbruchstellen (35) in der Verkleidungsschale (22) vorgesehen sind.

11. Cabriolet-Fahrzeug (10) mit einem beweglichen Dach (11) nach einem der vorangehenden Ansprüche.

## Claims

1. A movable roof (11) which is provided for a cabriolet vehicle (10), which movable roof (11) includes individual frame parts (14, 15, 16, 17),
**characterised in that**
at least one of the frame parts (14, 15, 16, 17), towards a vehicle inner space, is covered by a casing shell (22) and **in that** an inner ceiling (28) is fastened to the casing shell (22).

2. The roof (11) according to Claim 1,
whereby the or each casing shell (22) has, at least on an outer surface which is visible from the vehicle inner space, a lacquering, a coating, in particular a coating with a wood veneer, or a covering.

3. The roof (11) according to Claim 1 or 2,
whereby the or each casing shell (22) is releasably connected with, in particular locked together with the respective frame part (14, 15, 16, 17).

4. The roof (11) according to one of the preceding claims, whereby, in a space (29) remaining between the or each casing shell (22) and the respective frame part (14, 15, 16, 17), a function element (30, 31, 36), namely in particular a shock absorber (30) and/or an airbag (31) and/or one or more lines (36), is arranged.

5. The roof (11) according to Claim 4,
whereby the respective frame part (14, 15, 16, 17) has a bulge (32) for receiving the respective function element (30, 31, 36).

6. The roof (11) according to Claim 5,
whereby the bulge (32) is formed relative to a form-fit reception of the function element (30, 31, 36), in particular of one or more lines (36).

7. The roof (11) according to Claim 4, 5 or 6,
whereby, in the space (29), an airbag (31) is arranged as the function element and whereby the casing shell (22) has a flap (33) in the area of the airbag (31).

8. The roof (11) according to Claim 7,
whereby the flap (33) is held at a hinge (34) on one side.

9. The roof (11) according to Claim 8,
whereby, on the side of the flap (33) situated opposite the hinge (34), a predetermined breaking point (35) is provided in the casing shell (22).

10. The roof (11) according to Claim 9,
whereby, with the exception of the side with the hinge (34), predetermined breaking points (35) are provided in the casing shell (22) on all of the other sides of the flap (33).

11. A cabriolet vehicle (10) with a movable roof (11) according to one of the preceding claims.

## Revendications

1. Toit mobile (11) pour un véhicule cabriolet (10), qui comprend des parties de cadre individuelles (14, 15, 16, 17),
**caractérisé en ce**
**qu'**au moins l'une des parties de cadre (14, 15, 16, 17) est recouverte en regard d'un habitacle du véhicule par une coque de revêtement et en ce qu'un habillage interne (28) est fixé à la coque de revêtement (22).

2. Toit (11) selon la revendication 1,
dans lequel la ou chaque coque de revêtement (22) présente, au moins sur une surface extérieure visible depuis l'habitacle du véhicule, un laquage, un revêtement, notamment un revêtement avec un placage de bois ou un garnissage.

3. Toit (11) selon la revendication 1 ou 2,
dans lequel la ou chaque coque de revêtement (22) est connectée de manière amovible à la partie de cadre (14, 15, 16, 17) respective, notamment par encliquetage.

4. Toit (11) selon l'une quelconque des revendications précédentes, dans lequel, dans un espace intermédiaire (29) subsistant entre la ou chaque coque de revêtement (22) et la partie de cadre (14, 15, 16, 17) respective, est disposé un élément fonctionnel (30, 31, 36), à savoir notamment un pare-chocs (30) et/ou un airbag (31) et/ou une ou plusieurs conduites (36).

5. Toit (11) selon la revendication 4,
dans lequel la partie de cadre (14, 15, 16, 17) respective présente un renflement (32) pour recevoir l'élément fonctionnel respectif (30, 31, 36).

6. Toit (11) selon la revendication 5,
dans lequel le renflement (32) est façonné en vue de recevoir par engagement par coopération de forme l'élément fonctionnel (30, 31, 36), notamment une ou plusieurs conduites (36).

7. Toit (11) selon la revendication 4, 5 ou 6,
dans lequel on dispose dans l'espace intermédiaire (29) en tant qu'élément fonctionnel, un airbag (31), et dans lequel la coque de revêtement (22) présente, dans la région de l'airbag (31), un volet (33).

8. Toit (11) selon la revendication 7,
dans lequel le volet (33) est maintenu d'un côté au niveau d'une charnière (34).

9. Toit (11) selon la revendication 8,
dans lequel on prévoit du côté du volet (33) opposé à la charnière (34), un point destiné à la rupture (35) dans la coque de revêtement (22).

10. Toit (11) selon la revendication 9,
dans lequel on prévoit sur tous les côtés du volet (33), sauf celui avec la charnière (34), des points destinés à la rupture (35) dans la coque de revêtement (22).

11. Véhicule cabriolet (10) avec un toit mobile (11) selon l'une quelconque des revendications précédentes.
